(19) Europäisches Patentamt
European Patent Office
Office européen des brevets

(11) **EP 4 657 252 A1**

(12) **EUROPEAN PATENT APPLICATION**
published in accordance with Art. 153(4) EPC

(43) Date of publication:
**03.12.2025 Bulletin 2025/49**

(51) International Patent Classification (IPC):
***G06F 9/455*** *(2018.01)*

(21) Application number: **24847509.7**

(86) International application number:
**PCT/CN2024/073763**

(22) Date of filing: **24.01.2024**

(87) International publication number:
**WO 2025/025540 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023   CN 202310942815**

(71) Applicant: **Jingdong Technology Information Technology Co., Ltd.**
**Beijing 100176 (CN)**

(72) Inventor: **MENG, Xiangbin**
**Beijing 100176 (CN)**

(74) Representative: **Böckmann genannt Dallmeyer, Georg Nikolas**
**Haldenstrasse 49b**
**8142 Uitikon Waldegg (Zürich) (CH)**

(54) **RUNTIME VIRTUALIZATION METHOD AND APPARATUS, AND RUNTIME VIRTUAL MACHINE SYSTEM**

(57)    The disclosure provides a runtime virtualization method and apparatus. A specific implementation of the method comprises: constructing a dynamic runtime library based on a native runtime library of an application program, the dynamic runtime library simulating a thread implemented in the native runtime library in a co-routine manner; loading the dynamic runtime library when starting the application program, and generating a runtime virtualization environment and a co-routine scheduling thread running in the runtime virtualization environment, the co-routine scheduling thread being used to schedule a co-routine, and the runtime virtualization environment being an environment after a runtime environment generated by the native runtime library is replaced; receiving a task request of the application program in the runtime virtualization environment; and scheduling the co-routine using the co-routine scheduling thread based on the task request and the dynamic runtime library, so that the co-routine completes a task corresponding to the task request.

FIG. 1

**Description**

CROSS-REFERENCE TO RELATED APPLICATIONS

The present application claims priority to Chinese Patent Application No. 202310942815.0, which was filed on July 28, 2023 and entitled "Runtime Virtualization Method and Apparatus, and Runtime Virtual Machine System", the content of which is hereby incorporated by reference in its entirety.

TECHNICAL FIELD

The disclosure relates to the field of computer technology, and specifically relates a runtime virtualization method and apparatus, a runtime virtual machine system, an electronic device, and a computer-readable medium.

BACKGROUND

A co-routine is a lightweight parallel sub-program that time-division multiplexes a runtime slice of a host thread. Since the co-routine multiplexes the context of the host thread, a process of resuming and yielding the co-routine only corresponds to one function call, which avoids an additional context switching cost. Compared to the ordinary threads, the cost of resuming and yielding the co-routine once is generally about an order of magnitude lower.

SUMMARY

The embodiments of the disclosure provide a runtime virtualization method and apparatus, a runtime virtual machine system, an electronic device, and a computer-readable medium.
In one or more embodiments, the disclosure provides a runtime virtualization method, the method comprising: constructing a dynamic runtime library based on a native runtime library of an application program, the dynamic runtime library simulating a thread implemented in the native runtime library in a co-routine manner; loading the dynamic runtime library when starting the application program, and generating a runtime virtualization environment and a co-routine scheduling thread running in the runtime virtualization environment, the co-routine scheduling thread being used to schedule at least one co-routine, and the runtime virtualization environment being an environment after a runtime environment generated by the native runtime library is replaced; receiving a task request of the application program in the runtime virtualization environment; and scheduling the co-routine using the co-routine scheduling thread based on the task request and the dynamic runtime library, so that the co-routine completes a task corresponding to the task request.
In some embodiments, the aforesaid scheduling the co-routine using the co-routine scheduling thread based on the task request and the dynamic runtime library, so that the co-routine completes a task corresponding to the task request comprises: creating at least one co-routine based on the task request and the dynamic runtime library; and transmitting the at least one co-routine to the co-routine scheduling thread so as to schedule the at least one co-routine using the co-routine scheduling thread.
In some embodiments, the aforesaid co-routine scheduling thread includes: a scheduler and a lock-free queue for placing the at least one co-routine, and the scheduling the at least one co-routine using the co-routine scheduling thread comprises: acquiring, by the scheduler, a co-routine in a ready state among the at least one co-routine from the lock-free queue; synchronizing a co-routine context of the co-routine with a thread context in a thread control block; acquiring, by the scheduler, a next co-routine in the ready state from the lock-free queue, and synchronizing a co-routine context of the next co-routine with the thread context in the thread control block after the co-routine actively yields; and continuing to acquire, by the scheduler, a co-routine from the lock-free queue and synchronizing the thread control block until there is no co-routine in the lock-free queue after the next co-routine actively yields.
In some embodiments, the aforesaid method further comprises: receiving a native request of the application program; and creating at least one thread based on the native request and the native runtime library in the dynamic runtime library, and executing a task corresponding to the native request by the at least one thread.
In some embodiments, the aforesaid constructing a dynamic runtime library based on a native runtime library of an application program comprises: constructing a thread library function hook related to a first library function using a hook mechanism, the first library function being a library function for creating a thread and acquiring a thread descriptor in the native runtime library; and replacing the thread descriptor with a co-routine context structure in the thread library function hook, marking a current running thread or co-routine by a global variable with a thread local constraint, and managing thread local storage information in the co-routine context structure by a synchronization management module, the synchronization management module being used to synchronize thread local storage of the co-routine when the co-routine scheduling thread schedules the co-routine.
In some embodiments, the aforesaid constructing a dynamic runtime library based on a native runtime library of an application program further comprises: constructing a lock library function hook related to a second library function using the hook mechanism, the second library function being a library function that is respectively related to a lock, a conditional variable, and a semaphore in the native runtime library; and judging a current running subject by the global variable, and giving a lock mechanism corresponding to the current running subject based on the current running subject in the lock library function hook.

In some embodiments, the constructing a dynamic runtime library based on a native runtime library of an application program further comprises: constructing a switching library function hook related to a third library function using the hook mechanism, the third library function being a library function that can cause a thread switching or suspension operation in the native runtime library; and replacing, by the switching library function hook, a thread switching or suspension mechanism with a co-routine switching or suspension mechanism.

In one or more embodiments, the disclosure provides a runtime virtualization apparatus, the apparatus comprising: a constructing unit, which is configured to construct a dynamic runtime library based on a native runtime library of an application program, the dynamic runtime library simulating a thread implemented in the native runtime library in a co-routine manner; a generating unit, which is configured to load the dynamic runtime library when starting the application program, and generating a runtime virtualization environment and a co-routine scheduling thread running in the runtime virtualization environment, the co-routine scheduling thread being used to schedule at least one co-routine, and the runtime virtualization environment being an environment after a runtime environment generated by the native runtime library is replaced; a task receiving unit, which is configured to receive a task request of the application program in the runtime virtualization environment; and a co-routine scheduling unit, which is configured to schedule the co-routine using the co-routine scheduling thread based on the task request and the dynamic runtime library, so that the co-routine completes a task corresponding to the task request.

In some embodiments, the aforesaid scheduling unit is configured to: create at least one co-routine based on the task request and the dynamic runtime library; and transmit the at least one co-routine to the co-routine scheduling thread so as to schedule the at least one co-routine using the co-routine scheduling thread.

In some embodiments, the aforesaid co-routine scheduling thread includes: a scheduler and a lock-free queue for placing the at least one co-routine, and the scheduling unit is further configured to: acquire, by the scheduler, a co-routine in a ready state among the at least one co-routine from the lock-free queue; synchronize a co-routine context of the co-routine with a thread context in a thread control block; acquire, by the scheduler, a next co-routine in the ready state from the lock-free queue, and synchronize a co-routine context of the next co-routine with the thread context in the thread control block after the co-routine actively yields; and continue to acquire, by the scheduler, a co-routine from the lock-free queue and synchronize the thread control block until there is no co-routine in the lock-free queue after the next co-routine actively yields.

In some embodiments, the aforesaid apparatus further comprises: a native receiving unit, which is configured to receive a native request of the application program; and a thread scheduling unit, which is configured to create at least one thread based on the native request and the dynamic runtime library, and execute a task corresponding to the native request by the at least one thread.

In some embodiments, the aforesaid constructing unit is configured to: construct a thread library function hook related to a first library function using a hook mechanism, the first library function being a library function for creating a thread and acquiring a thread descriptor in the native runtime library; and replace the thread descriptor with a co-routine context structure in the thread library function hook, mark a current running thread or co-routine by a global variable with a thread local constraint, and manage thread local storage information in the co-routine context structure by a synchronization management module, the synchronization management module being used to synchronize thread local storage of the co-routine when the co-routine scheduling thread schedules the co-routine.

In some embodiments, the aforesaid constructing unit is configured to: create a lock library function hook related to a second library function using the hook mechanism, the second library function being a library function that is related to a lock in the native runtime library; and judge a current running subject by the global variable with a thread local constraint, and give a lock mechanism corresponding to the current running subject based on the current running subject in the lock library function hook.

In some embodiments, the aforesaid constructing unit is configured to: construct a switching library function hook related to a third library function using the hook mechanism, the third library function being a library function that can cause a thread switching or suspension operation in the native runtime library; and replace, by the switching library function hook, a thread switching or suspension mechanism with a co-routine switching or suspension mechanism.

In one or more embodiments, the disclosure provides a runtime virtual machine system, the system comprising: a co-routine scheduling thread, a main thread, an event-driven (EPOLL) thread, and an asynchronous input and output (AIO) and timer thread running in a runtime virtualization environment, wherein the runtime virtualization environment is generated by loading a dynamic runtime library, the dynamic runtime library is constructed based on a native runtime library of an application program, and the dynamic runtime library simulates a thread implemented in the native runtime library in a co-routine manner; the co-routine scheduling thread is used to schedule at least one co-routine, so that the co-routine completes a task request of the application program; the main thread is created when the application program is started; the event-driven thread is used to maintain a state of a file handle and wake up a corresponding co-routine when a read or write cache is ready and a read or write task blocked on the file handle exists; and the asynchronous input and output and timer thread acquires an asynchronous input and output task result and wakes up a co-routine in an IO wait; when the system calls timeout return, a timeout task is popped out and woken up; when the system calls an asynchronous IO task result, the co-routine in the IO wait is woken up.

In one or more embodiments, the disclosure provides an electronic device, the electronic device comprising: one or more processors; and a storage means, on which one or more programs are stored, the one or more programs, when executed by the one or more processors, causing the one or more processors to implement the method as described in any of the aforesaid method embodiments.

In one or more embodiments, the disclosure provides a computer-readable storage medium, on which a computer program is stored, the program, when executed by a processor, implementing the method as described in any of the aforesaid method embodiments.

BRIEF DESCRIPTION OF DRAWINGS

The other features, objects, and advantages of the disclosure will become more apparent by reading detailed descriptions of non-limiting embodiments made with reference to the figures below:

FIG. 1 is a flow chart of an embodiment of a runtime virtualization method according to the disclosure;
FIG. 2 is a schematic diagram of a structure of an embodiment of a runtime virtualization apparatus according to the disclosure;
FIG. 3 is a schematic diagram of a structure of a runtime virtual machine system according to the disclosure;
FIG. 4 is another schematic diagram of the structure of the runtime virtual machine system according to the disclosure;
FIG. 5 is a schematic diagram of a structure of an electronic device suitable for implementing embodiments of the disclosure.

DETAILED DESCRIPTION

The disclosure is further described in detail below in combination with the figures and embodiments. It may be understood that the specific embodiments described herein are only used to explain the relevant invention, rather than to limit the invention. In addition, it should also be noted that in order to facilitate the descriptions, only the parts related to the relevant invention are shown in the figures.

It should be noted that, in a case where there is no conflict, the embodiments and the features in the embodiments in the disclosure may be combined with each other. The disclosure will be described in detail below with reference to the figures and in combination with the embodiments.

A runtime virtual machine system is often used to provide a cross-platform support or provide a virtualized running environment, and a dynamic library injection is a technical solution that may be used to implement a runtime virtual machine. A shared library, which overwrites a function in an original application and a function in a shared library linked by the original application with its function hook, is injected into an application program.

Among the currently available solutions of this type, libhybris based on Android bionic is a typical example. Android shared libraries are all compiled based on bionic, but a Linux distribution of a GNU version does not have a bionic runtime environment. In order to run the Android shared library in a GNU distribution system, a runtime virtual machine compatible with glibc is required, that is, a libhybris library loads the Android shared library based on a glibc system and overwrites a bionic library function using a hook function in libhybris. The hook function of libhybris simulates a similar implementation in the bionic library function by dynamically loading and calling a corresponding function in glibc. In other words, libhybris solves a compatibility problem between two C runtime libraries and implements a runtime environment for running an Android program across platforms.

Libhybris may be deemed as a complete runtime virtual machine that implements a complete set of bionic simulation runtime environments in a GNU environment. In addition, many co-routine libraries also implement some C runtime library hooks to solve an asynchronization problem of co-routine lock wait and IO wait, such as an open source libco library, libgo library, and so on.

A complete co-routine library will hook those IO library functions that require blocking wait (IO may not be completed immediately, so a corresponding library function call is required to wait for ending of an IO operation before returning), as well as a co-routine-specific lock.

Why is the co-routine required to hook the IO library functions? Since the running of the co-routine is attached to the host thread thereof, once the co-routine tries to call a library function that may cause blocking wait, the host thread will be suspended in the wait process until the function returns. During this suspension stage, the host thread cannot execute any other code.

The co-routine is scheduled by time-division multiplexing a time slice of a host thread, and the performance thereof depends on the effective utilization of the time slice of the host thread. Once the host thread is suspended by a certain co-routine and no other co-routines can be called during this period, the time slice during this suspension stage will be wasted, thereby resulting in a decrease in the overall performance. The co-routine suspending the host thread will not only affect the performance, but also cause a scheduling "deadlock" problem. Imagining a case where when all the host threads fall into long-term suspension wait, and a new co-routine wants to be scheduled for execution at this time, the system falls into a state similar to "deadlock", and the new co-routine can only wait for one of the host threads to return from the suspended library function. Once the new co-routine has a certain "timeout" mechanism, an extreme case where the new co-routine always times out and fails may occur. In addition, if the co-routine uses a "thread lock", a "scheduling deadlock" will be aggravated. If a co-routine 1 is yielded in a case where a thread lock A is held, and a co-routine 2, which is resumed by the current host thread, is also required to lock the thread lock A, the co-routine 2 will suspend the host thread to wait for the release of the thread lock A; but since the host thread is suspended, it will never have the opportunity of being resumed in the co-routine 1 that may unlock the thread lock A, thereby resulting in a complete deadlock.

A complete co-routine library is required to simulate all library functions that may cause blocking wait (including IO wait and lock wait) with non-blocking asynchronous calls. In other words, when a co-routine may fall into IO wait or lock wait, it should return to the host thread using a yield mechanism, so that the host thread may continue to call other co-routines; subsequently, when the co-routine that was previously yielded due to wait may be continued to be executed (that is, resources it is waiting for are ready - such as IO completion, unlocking, and so on), it may be resumed again in a subsequent idle time slice of the host thread. An IO library function hook providing the C runtime library in the co-routine library is a comparatively perfect solution. For example, when an application program using the co-routine library calls a recv function to receive a network packet, it will actually call the recv function hooked by the co-routine library; if the network packet has not arrived at this time, the hook function will be yielded with the yield mechanism; subsequently, when the network packet arrives, the co-routine that was previously yielded will be resumed again at a certain appropriate time and be continued to be executed from the position where it was previously yielded to complete receiving the network packet and returning from the hook function. In this way, during application program development, the function in the C runtime library may be directly used; until runtime, a native library function is dynamically replaced with a hook function of a co-routine version in a dynamic library injection manner. In this way, by means of the aforesaid solution, almost "transparent" co-routinization of the application is implemented.

An application program may have both a co-routine and a thread. Wait of a co-routine lock is simulated by a yield behavior, while wait of a thread lock requires the thread to be really suspended, and the behavior modes of the two parts are often incompatible. Thus, if the application using the co-routine library is to introduce a lock mechanism, it is required to carefully select whether to use the co-routine lock or the thread lock, so a complete "transparence" to the application cannot be achieved.

Furthermore, existing co-routine libraries generally do not properly handle a cross-co-routine security problem of thread local storage. In other words, the co-routines scheduled by the same host thread will share the thread local storage of the host thread, which will cause the co-routines to "pollute" each other's thread local storage, which makes it impossible to achieve a cross-co-routine safe access to the thread local storage, so the co-routine does not have a capability equivalent to that of the thread.

In summary, most co-routine libraries are not a complete runtime virtual machine, but only hook some C runtime library functions in a dynamic library injection manner so as to solve a concurrency performance problem and a scheduling deadlock problem. In other words, the co-routine library is generally just a runtime virtualization solution for a thread (simulating the thread using a co-routine), and will not completely simulate an underlying interface in the C runtime library.

In order to better understand traditional technologies, some terms are introduced below:
Shared library: it is also known as a "dynamic link library", and is a manner of implementing shared functions or objects in an operating system. Compiled functions are stored in the shared library, and an application program may dynamically load such library files and reference corresponding functions by function names. The same shared library may be loaded by different application programs.

C runtime library: it is a general term for a type of dynamic link libraries providing encapsulation of system calls and various operating system management interfaces, and providing a C language-based programming interface for an interaction between an application program and an operating system at runtime. The application program may be directly constructed based on the C runtime library, or run in a certain runtime virtual machine constructed based on the C runtime library.

Runtime virtual machine: it is a general term for programs and libraries providing development interfaces and runtime environments for other application programs. Such programs are generally developed based on the C runtime library, and aim to provide a cross-platform program running environment (such as a "JAVA virtual machine", which shields differences between the C runtime libraries of different operating systems and provides system-independent development interfaces and running environments); or provide a virtualized running environment for a target operating system (such as a "container", which may run a plurality of container systems simultaneously in one host system). As compared to a "virtual machine", the runtime virtual machine will not completely simulate a virtual host, but only provide a runtime environment, so it is lighter.

Dynamic library injection: reverse engineering a third-party application to make it execute an injected code is called "code injection"; the dynamic library injection is just a manner of implementing the code injection.

The so-called "dynamic library injection" is just to inject the code in the shared library into the target application by loading the shared library into the application program, so that this part of the code is executed by the application, or the original code in the application is dynamically replaced with the injected code (the latter is also called a code "hook").

Co-routine: it is also known as a "fiber thread" or a "micro" thread, and is a computer component that generates non-preemptive multitasking sub-programs. The co-routine is generally attached to a certain thread, and allows different sub-program entries to pause or start at a same position. In brief, the co-routine is a function that may be paused and started. Different co-routines may be deemed as different functions, which are called for execution by the host thread. In the execution process, the co-routine can return to the position where it is called by the host thread by actively yielding. When the host thread resumes the co-routine function again, the co-routine will be continued to be executed from the position where it was previously yielded (that is, the so-called "same position" in the previous contents).

Thread local storage (TLS): it is also known as thread local storage, and is a solution to a thread security problem in a specific scenario. In brief, it is just a variable with a process-global scope, and when it has a thread local constraint, this variable may have different values in different threads (that is, thread local values). TLS is divided into two types and three cases according to its implementation method. The first type is a variable with a thread local constraint declared during encoding, for example:

static__thread int global_tls_value=0.

The above variable declaration just represents a global integer variable with an initial value of 0. This variable may be accessed in all threads of a program in which it is located; but changes made to the value of this variable by different threads are only visible to the respective threads themselves. The TLS variable of this type (called "dtv" in glibc) may determine its position in a program data segment and its initial value during a compilation stage, so its relevant information and initial value will be stored in a compiled target program, and when the program is loaded, its position in a thread local context will be locked therefor. There is another case where when the program loads a certain shared library during running, if there are also TLS variables in the shared library, it is required to dynamically determine the positions of these TLSs in the thread local context when loading the shared library. In addition to the TLS variable that has been declared during the encoding, there is a second type, which is dynamically created TLS. In different operating systems, similar APIs will be provided to support TLSs of this type.

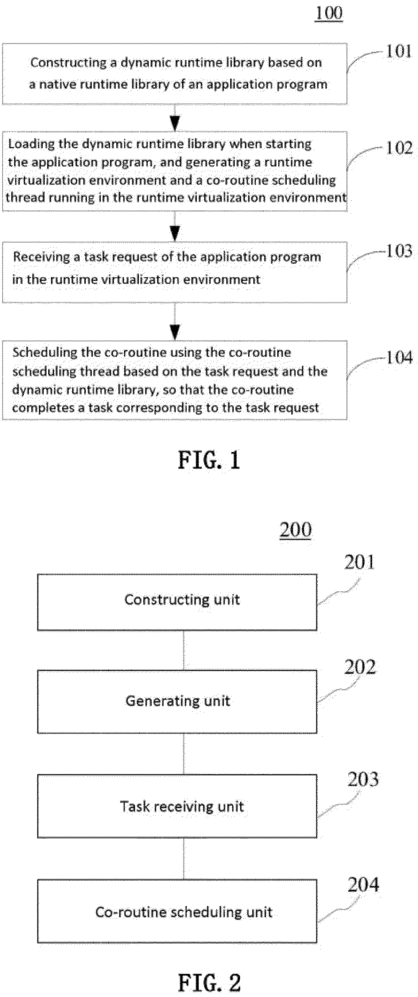

The disclosure provides a runtime virtualization method, which may flexibly adopt a co-routine to implement simulation and scheduling of a thread, and thus improve a concurrency performance. A flow 100 of an embodiment of a runtime virtualization method according to the disclosure is as shown in FIG. 1. The runtime virtualization method comprises the following steps:

Step 101: constructing a dynamic runtime library based on a native runtime library of an application program.

In this embodiment, the native runtime library is a runtime library that supports running of an application program and provides a programming interface for an interaction between the application program and the operating system at runtime. The native runtime library may be constructed based on a C language.

In this embodiment, the dynamic runtime library is a shared library, and the compiled functions are stored in the dynamic runtime library. The dynamic runtime library provides an API (Application Program Interface) interface that supports a task request to the application program. The API interface is the library function of the dynamic runtime library, when the dynamic runtime library is not loaded, the application program is required to call the API of the native runtime library (the library function of the native runtime library), and after the dynamic runtime library is loaded, the API of the native runtime library is hijacked by the library function of the dynamic runtime library. Thus, when the application program has a task requirement, it is the API of the dynamic runtime library that is actually called, and a task request is issued to the API of the dynamic runtime library. On the basis the native runtime library, the dynamic runtime library may be obtained by hooking library functions related to thread scheduling in the native runtime library, and after the obtained dynamic runtime library is loaded, it may have a scheduling capability equivalent to that of the thread.

In this embodiment, the C runtime library may be completely hooked to obtain the dynamic runtime library, which provides a runtime virtualization environment, and the application program runs in the runtime virtualization environment to implement simulation of a thread implemented in the native runtime library in a co-routine manner, thereby achieving a purpose of simulating a thread in a co-routine manner and scheduling a co-routine by a co-routine scheduling thread.

Step 102: loading the dynamic runtime library when starting the application program, and generating a runtime virtualization environment and a co-routine scheduling thread running in the runtime virtualization environment.

In this embodiment, the co-routine scheduling thread is used to schedule at least one co-routine, and the runtime virtualization environment is an environment after a runtime environment generated by the native runtime library is replaced.

In this embodiment, loading the dynamic runtime library means dynamically injecting the dynamic runtime library into the application program when the operating system starts the application program, and the runtime injection of the dynamic runtime library means loading a certain shared library and running an initialization code in the shared library before the operating system starts an application program and loads the program into the memory. In such program loading manner, the pre-loaded shared library has the opportunity to construct a runtime virtualization environment in advance, which runtime virtualization environment may replace the runtime environment generated by the native runtime library. In this runtime virtualization environment, the application program or the operating system may call the functions in the dynamic runtime library in real time. In this embodiment, after the application program is started, the co-routine scheduling thread may be correspondingly started.

In this embodiment, by loading the dynamic runtime library, the runtime virtualization environment may be implemented without making any modification to the application program (neither changing the application program code nor recompiling the application program). At this time, the application program runs in the runtime virtualization environment without being perceived (in this runtime virtualization environment, when the application program is required to call the library function of the native runtime library, it actually calls the library function of the dynamic runtime library). The runtime virtualization method provided by the disclosure not only improves a performance and reduces resource consumption, but also enables an application program developed based on the native runtime library to achieve performance improvement and reduction in resource consumption without being modified or perceived.

In this embodiment, the co-routine scheduling thread is a thread that schedules a co-routine. There may be one or more co-routine scheduling threads, and the number of the co-routine scheduling threads may be determined based on the number of cores. For example, for an operating system with 64 cores, the number of the co-routine scheduling threads is 64.

Optionally, the co-routine in this embodiment may have a capability comparable to that of the thread, and the co-routine may also completely simulate the behavior of the thread, so the co-routine scheduling thread may also be considered as a thread that schedules a thread.

Step 103: receiving a task request of the application program in the runtime virtualization environment.

In this embodiment, the task request of the application program may correspond to one or more tasks. With respect to the respective different tasks, the application program may construct a corresponding thread or co-routine by calling a function in the dynamic runtime library. Each thread executes a corresponding task, and each co-routine executes a corresponding task.

In this embodiment, the application program is a program developed based on the native runtime library. On the premise that the application program is not modified or perceived, the application program is made to run in the runtime virtualization environment without being perceived, and the application program calls the library function in the dynamic runtime library to implement the corresponding function.

Step 104: scheduling the co-routine using the co-routine scheduling thread based on the task request and the dynamic runtime library, so that the co-routine completes a task corresponding to the task request.

In this embodiment, the task request is a request for handling a task by a co-routine. After obtaining the task request of the application program, an execution subject calls a function in the dynamic runtime library to generate at least one co-routine corresponding to the task request, or calls a function in the dynamic runtime library to collect an existing co-routine corresponding to the task request, and different co-routine scheduling threads are distinguished based on the co-routine context of the co-routine. The execution subject transmits the co-routine to the corresponding co-routine scheduling thread, and the co-routine scheduling thread schedules the at least one co-routine obtained to make the respective co-routines work to complete the task corresponding to the task request.

The runtime virtualization method provided by the embodiment of the disclosure firstly constructs a dynamic runtime library based on a native runtime library of an application program; secondly loads the dynamic runtime library when starting the application program, and generates a runtime virtualization environment and a co-routine scheduling thread running in the runtime virtualization environment, the co-routine scheduling thread being used to schedule at least one co-routine, and the runtime virtualization environment being an environment after a runtime environment generated by the native runtime library is replaced; thirdly receives a task request of the application program in the runtime virtualization environment; and finally schedules the co-routine using the co-routine scheduling thread based on the task request and the dynamic runtime library, so that the co-routine completes a task corresponding to the task request. Thus, the disclosure generates a runtime virtualization environment by a dynamic runtime library, transparently replaces a runtime environment of an application program, and improves the concurrency performance of the application program without modifying or recompiling the application program; the co-routine having a thread capability that is generated by the dynamic runtime library supports lightweight co-routine scheduling, which may effectively control a thread resource occupancy rate in a system, and reduce system resource consumption and resource scheduling pressures, thereby improving the overall throughput and availability of the system.

In some optional implementation of this embodiment, the scheduling the co-routine using the co-routine scheduling thread based on the task request and the dynamic runtime library, so that the co-routine completes a task corresponding to the task request comprises:

creating at least one co-routine based on the task request and the dynamic runtime library; and transmitting the at least one co-routine to the co-routine scheduling thread so as to schedule the at least one co-routine using the co-routine scheduling thread.

In this embodiment, the aforesaid creating at least one co-routine based on the task request and the dynamic runtime library comprises: determining a task based on the task request; and scheduling a thread library function hook in the dynamic runtime library, and creating a co-routine corresponding to the task by the thread library function hook. The thread library function hook is obtained by hooking the first library function, and the first library function is a library function for creating a thread and acquiring a thread descriptor in the native runtime library.

The method for scheduling a co-routine scheduling thread using a co-routine provided by this embodiment firstly constructs a co-routine corresponding to a task request in a manner of constructing a thread, which may make the obtained co-routine have a capability the same as that of the thread; and secondly schedules the constructed co-routine using a co-routine scheduling thread, which improves the task execution efficiency.

In some optional implementations of this embodiment, the co-routine scheduling thread includes: a scheduler and a lock-free queue for placing the at least one co-routine, and the scheduling the at least one co-routine using the co-routine scheduling thread comprises: acquiring, by the scheduler, a co-routine in a ready state among the at least one co-routine from the lock-free queue; synchronizing a co-routine context of the co-routine with a thread context in a thread control block; acquiring, by the scheduler, a next co-routine in the ready state from the lock-free queue, and synchronizing a co-routine context of the next co-routine with the thread context in the thread control block after the co-routine actively yields; and continuing to acquire, by the scheduler, a co-routine from the lock-free queue and synchronizing the thread control block until there is no co-routine in the lock-free queue after the next co-routine actively yields.

In this embodiment, the thread control block is a data structure of a thread in the native runtime library, which is called a "thread control block" (TCB for short), that is, a context structure of a thread. dtv and specific array are data structures that store TLS data in the TCB. dtv: it is used to store TLS variables defined during an encoding stage. The data will increase as the application program loads a new shared library, because TLS variables may also exist in the shared library.

specific: it is a dynamically created TLS (where the library functions for creating and deleting TLS keys are pthread_key_create and pthread_key_delete, respectively; and the library functions for reading and modifying TLS values are pthread_getspecific and pthread_setspecific, respectively). TLSs of this type are maintained using a set of pointer arrays (specific arrays), so there is an upper limit for the number (Linux supports creation of up to 1024 dynamic TLSs).

In this embodiment, the scheduler will perform incremental synchronization of TLS data between the TCB and the co-routine context.

The co-routine scheduling thread provided by this embodiment has a scheduler and a lock-free queue. The co-routine in the lock-free queue is scheduled by the scheduler to implement the task corresponding to the task request of the application program, and since the co-routine scheduling thread will not be suspended by any operation, reliability of task execution is ensured.

In another embodiment of the disclosure, the aforesaid method further comprises: receiving a native request of the application program; and creating at least one thread based on the native request and the native runtime library in the dynamic runtime library, and executing a task corresponding to the native request by the at least one thread.

In this embodiment, the native request is a request for the application program to call a library function in the native runtime library to generate a thread. The aforesaid creating at least one thread based on the native request and the native runtime library in the dynamic runtime library comprises: determining a thread creation task based on the native request; and calling a function for creating a native thread from the native runtime library based on the thread creation task, and creating at least one thread for executing the task corresponding to the native request.

The runtime virtualization method provided by this embodiment retains the capability of the native runtime library by the dynamic runtime library, creates at least one thread when the application program is required to schedule a construction thread function of the native runtime library, and executes a task corresponding to the native request by the at least one thread, which improves diversity of request execution and ensures compatibility of a thread and a co-routine.

In view that the traditional co-routine library does not implement co-routinized simulation for the thread local storage, and thus does not solve the problem of insecure use of the thread local storage in the co-routine, in some optional implementation modes of the disclosure, the aforesaid constructing a dynamic runtime library based on a native runtime library of an application program comprises: constructing a thread library function hook related to a first library function using a hook mechanism, the first library function being a library function for creating a thread and acquiring a thread descriptor in the native runtime library; and replacing the thread descriptor with a co-routine context structure in the thread library function hook, marking a current running thread or co-routine by a global variable with a thread local constraint, and managing thread local storage information in the co-routine context structure by a synchronization management module, the synchronization management module being used to synchronize thread local storage of the co-routine when the co-routine scheduling thread schedules the co-routine.

The co-routine context structure (hereinafter referred to as a COCTX structure) is a structure for placing the co-routine context (hereinafter referred to as a COCTX), which is used to maintain the context of the co-routine, and the purpose of which is similar to that of a thread descriptor (or a thread handle). In order to provide compatibility with a thread behavior, it is required to hook a library function for creating a thread and acquiring a thread descriptor in the native runtime library, and replace the thread descriptor with the COCTX. Taking Linux as an example, the thread descriptor thereof is called "TCB" and the implementation thereof is a structure called "pthread". The calls for creating a thread and acquiring a thread descriptor in Linux are respectively:

pthread_create: it creates a thread and returns a thread descriptor, and the value of this thread descriptor is the address of the TCB structure. In this embodiment, the hook for creating a thread function is replaced with a pointer returning to the COCTX.

pthread_self: it acquires the descriptor of the current thread, and is also replaced with the pointer of the COCTX.

In this embodiment, a global TLS variable (a global variable with a thread local constraint) may be used to acquire the context of the current co-routine, which is declared as follows:

extern__thread COCTX*_current_coctx;

In this embodiment, the COCTX has the following 4 types:

Co-routine COCTX: it corresponds to an actual co-routine;

Global COCTX: _current_coctx of the main thread will be set to a global COCTX, which will be created when the dynamic runtime library is just loaded;

Scheduler COCTX: each co-routine scheduling thread (just a thread that runs a co-routine) will have a default COCTX, and if no co-routine is in the ready state, or in the intermediate state of switching between two co-routines, the _current_coctx of the current thread will be set to a scheduler COCTX;

Single COCTX: when a system native thread is created, a virtual COCTX will be created therefor.

As mentioned above, the hook function of the pthread_self is actually just a value returning to the _current_coctx. In the program, by judging the type of the current COCTX, it may be known which thread and running state are currently involved.

In this embodiment, the contents stored in the COCTX structure include: a co-routine stack and a TLS. The dynamic runtime library allocates an independent stack for each co-routine, so it may completely simulate a behavior of a thread (including the size of the memory allocated in the stack and the depth of the call stack).

If the co-routine cannot completely simulate the TLS mechanism of the thread, the co-routine will be rendered unable to securely access a variable with a TLS constraint. In this embodiment, encapsulation of TLS management is implemented by a synchronization management module (hereinafter referred to as co_tls), and the capability provided by the co_tis is crucial for "transparent" simulation of the thread. Taking Linux as an example, its TCB stores the following two types of TLS: dtv and specific.

The support of the specific by the co_tls in the disclosure: a data structure similar to the specific arrays in the TCB is required to be maintained in the co_tls, and when a newly created co-routine is resumed for execution for the first time, the specific in the TCB of the scheduling thread to which it belongs will be copied. In addition, it is further required to hook and manage the library functions of the specific, the library functions of Linux are listed above, and there are also similar functions in Windows, namely TlsAlloc, TlsFree, TlsGetValue, and TlsSetValue.

The support of the dtv by the co_tls in the disclosure: similarly, when a newly created co-routine is scheduled for execution for the first time, it is also required to copy the dtv in the TCB. However, unlike the specific, the content of the specific in the co_tls is no longer required to be synchronized with the TCB; but since other shared libraries may be dynamically loaded at runtime, the dtv of the co_tls is required to be incrementally synchronized with the dtv in the TCB. A dtv incremental backup of the TCB is stored in scheduler COCTX for describing an incremental part generated by the dtv each time a shared library is loaded. Meanwhile, it is required to hook the library function call for loading the shared library (this library function is called dlopen in Linux and corresponds to LoadLibrary in Windows). Taking Linux as an example, a data structure called "link_map" describes all pieces of shared library information, and in combination with the link_map and the dtv incremental backup, a difference between the current co-routine and a dtv increment may be analyzed. For the merging of the dtv increment, a "lazy" synchronization solution is adopted, that is, it is determined whether the dtv is required to be synchronized when the co-routine is about to be resumed. If the dlopen is called in a certain co-routine, it is required to identify the _current_coctx as a co-routine type in the hook of the dlopen and immediately synchronize the dtv for the current co-routine.

In this embodiment, a co-routine having a capability completely consistent with that of the thread may be simulated by a thread library function hook. The switching process of the co-routine is as follows: first, in the initial state of the co-routine scheduling thread, the _current_coctx is the scheduler COCTX; then, when it is required to resume a co-routine, it is checked whether there is a difference between the co-routine and the dtv incremental backup (if so, synchronization is required), and after difference synchronization is completed, the _current_coctx is set to the context of the current co-routine; finally, when the co-routine is required to be yielded, the _current_coctx is changed back to the scheduler COCTX. The entire co-routine switching process is executed completely in a user mode without any interaction with the operating system, thereby maintaining lightweight characteristics of the co-routine.

This embodiment implements co-routine TLS switching in a pure user mode, and maintains the cross-co-routine security of the TLS (taking into account both a high performance and "transparent" virtualization) while maintaining the lightweight characteristics of the co-routine switching.

This embodiment provides a method for constructing a dynamic runtime library, constructs a thread library function hook of a first library function in the native runtime library by a hook mechanism, replaces the original thread descriptor of the thread with a co-routine context in the thread library function hook, marks a current running subject by a global variable, and manages thread local storage information in the co-routine context structure by a synchronization management module, which may make the constructed co-routine have a capability the same as that of the thread, and improve reliability when the co-routine scheduling thread schedules the co-routine.

With respect to traditional technologies, the co-routine library does not properly solve a compatibility problem between a co-routine lock and a thread lock. In some optional implementation modes, the aforesaid constructing a dynamic runtime library based on a native runtime library of an application program further comprises:

constructing a lock library function hook related to a second library function using the hook mechanism, the second library function being a library function that is respectively related to a lock, a conditional variable, and a semaphore in the native runtime library; and judging a current running subject by the global variable with a thread local constraint, and giving a lock mechanism corresponding to the current running subject based on the current running subject in the lock library function hook.

In this optional implementation, based on the request of the application program, the current running subject may be a co-routine constructed by the dynamic runtime library, or a thread constructed by running the native runtime library; it may be identified whether the type of the running subject is a co-routine or a thread by the global variable, when the running subject is the thread, the thread library function hook further judges whether the current running subject is a co-routine scheduling thread or another thread, and when the current running subject is the co-routine scheduling thread, no lock or semaphore mechanism is used, and by this mechanism, it may be ensured that the co-routine scheduling thread will not suspend itself due to the use of a lock or a semaphore.

When the current running subject is a thread other than the co-routine scheduling thread (such as a main thread or a native thread), a lock mechanism corresponding to the operating system is used to transmit a wake-up signal based on the current operating system. For example, when the operating system is a Linux system, a futex mechanism is used to transmit the wake-up signal; when the operating system is a non-Linux system, the wake-up signal is transmitted in a pipeline communication and pollwait manner.

Futex mechanism: it is a hybrid synchronization mechanism of a user mode and kernel mode, and is one of basic components of Linux. State synchronization between the user mode and the kernel mode is performed by an atomic operation implemented based on a section of shared memory. The process in the user mode judges whether there is resource contention for the futex variable by the atomic operation, and if wait is required, it falls into the system call to suspend the thread; when the futex is woken up, it is also first checked whether there is a suspension wait task by the atomic operation, and only when the wake-up is required will it fall into the system call to perform the "wake up" operation. In brief, it is to avoid falling into the kernel mode when there is no resource contention by the atomic operation in the user mode, thereby greatly increasing the running efficiency in a "low-contention" scenario.

In this optional implementation, the aforesaid current running subject may also be an operation object without a timeout wait operation and an operation object with a timeout wait operation. The aforesaid giving a lock mechanism corresponding to the current running subject based on the current running subject comprises: for the case without the timeout wait operation, the co-routine context structure is directly placed in a wait queue of a lock object or a condition variable object, and a "suspension" method is called for the co-routine context structure (yield in a co-routine mode).

For the case with the timeout wait operation, it is required to place the co-routine context structure in the corresponding wait queue and time queue at the same time, and then call the "suspension" method for the co-routine context structure.

This embodiment implements a "transparent" lock mechanism that is compatible with a co-routine and a thread. In the hook of the lock-related library function in the C runtime library, it is automatically identified whether a co-routine context or a thread context is currently involved so as to adopt different behavior modes.

The method for constructing a lock library function hook provided by this optional implementation hooks the library function related to the thread lock in the native runtime library, implements a lock solution that is compatible with both the thread and the co-routine, and ensures compatibility of the thread lock and the co-routine lock in the runtime virtual machine system.

In some optional implementations of the disclosure, the aforesaid constructing a dynamic runtime library based on a native runtime library of an application program further comprises:

constructing a switching library function hook related to a third library function using the hook mechanism, the third library function being a library function that can cause a thread switching or suspension operation in the native runtime library; and replacing, by the switching library function hook, a thread switching or suspension mechanism with a co-routine switching or suspension mechanism.

The method for constructing a switching library function hook provided by this optional implementation hooks the function that can cause a thread switching or suspension operation in the native runtime library, and may adopt a co-routine switching and suspension manner when switching or suspending the thread, which improves the concurrency performance of the operating system.

With further reference to FIG. 2, as an implementation of the runtime virtualization method shown in the aforesaid respective figures, the disclosure provides an embodiment of a runtime virtualization apparatus, which corresponds to the method embodiment shown in FIG. 2, and the apparatus may be specifically applied to various electronic devices.

As shown in FIG. 2, the embodiment of the disclosure provides a runtime virtualization apparatus 200, the apparatus 200 comprising: a constructing unit 201, a generating unit 202, a task receiving unit 203, and a co-routine scheduling unit 204. The aforesaid constructing unit 201 may be configured to construct a dynamic runtime library based on a native runtime library of an application program, the dynamic runtime library simulating a thread implemented in the native runtime library in a co-routine manner. The aforesaid generating unit 202 may be configured to load the dynamic runtime library when starting the application program, and generating a runtime virtualization environment and a co-routine scheduling thread running in the runtime virtualization environment, the co-routine scheduling thread being used to schedule at least one co-routine, and the runtime virtualization environment being an environment after a runtime environment generated by the native runtime library is replaced. The aforesaid task receiving unit 203 may be configured to receive a task request of the application program in the runtime virtualization environment. The aforesaid co-routine scheduling unit 204 may be configured to schedule the co-routine using the co-routine scheduling thread based on the task request and the dynamic runtime library, so that the co-routine completes a task corresponding to the task request.

In this embodiment, reference may be made to step 101, step 102, step 103 and step 104 in the corresponding embodiment of FIG. 1 for the specific processing of the constructing unit 201, the generating unit 202, the task receiving unit 203, and the co-routine scheduling unit 204 in the runtime virtualization apparatus 200 and the technical effects brought thereby.

In some embodiments, the aforesaid scheduling unit 204 is configured to: create at least one co-routine based on the task request and the dynamic runtime library; and transmit the at least one co-routine to the co-routine scheduling thread so as to schedule the at least one co-routine using the co-routine scheduling thread.

In some embodiments, the aforesaid co-routine scheduling thread includes: a scheduler and a lock-free queue for placing the at least one co-routine, and the scheduling unit 204 is further configured to: acquire, by the scheduler, a co-routine in a ready state among the at least one co-routine from the lock-free queue; synchronize a co-routine context of the co-routine with a thread context in a thread control block; acquire, by the scheduler, a next co-routine in the ready state from the lock-free queue, and synchronize a co-routine context of the next co-routine with the thread context in the thread control block after the co-routine actively yields; and continue to acquire, by the scheduler, a co-routine from the lock-free queue and synchronize the thread control block until there is no co-routine in the lock-free queue after the next co-routine actively yields.

In some embodiments, the aforesaid apparatus 200 further comprises: a native receiving unit, which is configured to receive a native request of the application program; and a thread scheduling unit, which is configured to create at least one thread based on the native request and the dynamic runtime library, and execute a task corresponding to the native request by the at least one thread.

In some embodiments, the aforesaid constructing unit 201 is configured to: construct a thread library function hook related to a first library function using a hook mechanism, the first library function being a library function for creating a thread and acquiring a thread descriptor in the native runtime library; and replace the thread descriptor with a co-routine context structure in the thread library function hook, mark a current running thread or co-routine by a global variable with a thread local constraint, and manage thread local storage information in the co-routine context structure by a synchronization management module, the synchronization management module being used to synchronize thread local storage of the co-routine when the co-routine scheduling thread schedules the co-routine.

In some embodiments, the aforesaid constructing unit 201 is configured to: create a lock library function hook related to a second library function using the hook mechanism, the second library function being a library function that is respectively related to a lock, a conditional variable, and a semaphore in the native runtime library; and judge a current running subject by the global variable, and give a lock mechanism corresponding to the current running subject based on the current running subject in the lock library function hook.

In some embodiments, the aforesaid constructing unit 201 is configured to: construct a switching library function hook related to a third library function using the hook mechanism, the third library function being a library function that can cause a thread switching or suspension operation in the native runtime library; and replace, by the switching library function hook, a thread switching or suspension mechanism with a co-routine switching or suspension mechanism.

In the runtime virtualization apparatus provided by the embodiment of the disclosure, firstly, the constructing unit 201 constructs a dynamic runtime library based on a native runtime library of an application program; secondly, the generating unit 202 loads the dynamic runtime library when starting the application program, and generates a runtime virtualization environment and a co-routine scheduling thread running in the runtime virtualization environment, the co-routine scheduling thread being used to schedule at least one co-routine, and the runtime virtualization environment being an environment after a runtime environment generated by the native runtime library is replaced; thirdly, the task receiving unit 203 receives a task request of the application program in the runtime virtualization environment; and finally, the co-routine scheduling unit 204 schedules the co-routine using the co-routine scheduling thread based on the task request and the dynamic runtime library, so that the co-routine completes a task corresponding to the task request. Thus, the disclosure generates a runtime virtualization environment by a dynamic runtime library, transparently replaces a runtime environment of an application program, and improves the concurrency performance of the application program without modifying or recompiling the application program; the co-routine having a thread capability that is generated by the dynamic runtime library supports lightweight co-routine scheduling, which may effectively control a thread resource occupancy rate in a system, and reduce system resource consumption and resource scheduling pressures, thereby improving the overall throughput and availability of the system.

With respect to the aforesaid runtime virtualization method, the disclosure provides a runtime virtual machine system, which may be specifically applied to various electronic devices.

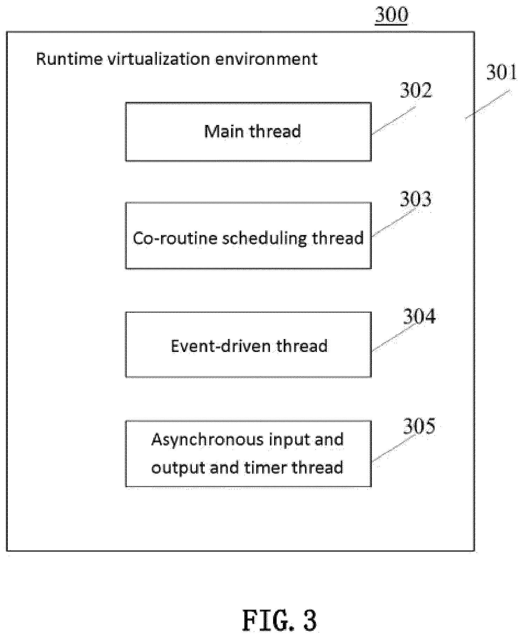

As shown in FIG. 3, the embodiment of the disclosure provides a runtime virtual machine system 300, the system 300 comprising: a main thread 302, a co-routine scheduling thread 303, an event-driven thread 304, and an asynchronous input and output and timer thread 305 running in a runtime virtualization environment 301, wherein the runtime virtualization environment 301 is generated by loading a dynamic runtime library, the dynamic runtime library is constructed based on a native runtime library of an application program, and the dynamic runtime library simulates a thread implemented in the native runtime library in a co-routine manner; the co-routine scheduling thread 303 is used to schedule at least one co-routine, so that the co-routine completes a task request of the application program; the main thread 302 is created when the application program is started; the event-driven thread 304 is used to maintain a state of a file handle and wake up a corresponding co-routine when a read or write cache is ready and a read or write task blocked on the file handle exists; and the asynchronous input and output and timer thread 305 acquires an asynchronous input and output task result and wakes up a co-routine in an IO wait; when the system calls timeout return, a timeout task is popped out and woken up; when the system calls an asynchronous IO task result, the co-routine in the IO wait is woken up.

The main thread 302, which will be created when the application is started, may be deemed as a special system native thread.

The co-routine scheduling thread 303 is responsible for repeatedly taking out the co-routine tasks in the ready state from the lock-free queue, resuming the co-routine context in a resume manner (including the co-routine just started), and continuing to execute the corresponding co-routine. When the co-routine yields (including the ending of the co-routine), if it is a co-routine in a non-wait state (that is, the CPU is just temporarily yielded), the corresponding co-routine is required to be put back into a wake-up queue and re-scheduled. The runtime virtual machine system of the disclosure adopts the context library of boost in practice to implement the switching of co-routine stacks and the resumption and yielding of co-routine functions.

The asynchronous input and output and timer thread 305, background parts of the asynchronous IO and timer, may be implemented in a same background thread. This is because a system call interface for waiting for an asynchronous IO event may specify a timeout, and the time accuracy of this type of timeout is sufficiently high to be suitable for timer implementation. As a background thread with a comparatively low load, merging the functions of the aforesaid two parts facilitates further reduction of the number of background threads. The asynchronous I/O and timer thread 305 interacts with other components in the system through two data structures below: AIO task queue: it is used to transmit io_event of an asynchronous IO task, and after the background thread calls io_getevents and returns the result, it will search this queue, transmit an IO operation result, and wake up the co-routine in the IO wait.

Timed queue: it manages a co-routine context in a timeout wait state. This queue stores a key-value structure with the timeout as the key and the COCTX as the value, and is sorted by key values (tasks with smaller key values-that is, tasks with the shortest timeout from the current time interval-are arranged in front positions).

The background thread repeatedly calls an io_getevents system call, and when this call timeout return, the timed queue is handled, the timeout task (either a co-routine or a native thread) is popped out and woken up; when the system call returns the asynchronous IO task result, the content of the io_event structure is transmitted, and the corresponding co-routine is woken up.

The event-driven thread 304, also called the Epoll thread, is responsible for maintaining POLLIN & POLLOUT states of all file handles that have been opened in the system and support poll operations. Since the dynamic runtime library has hooked library functions including socket, open, close, and so on, when the file handle (mainly the socket) is just created, it is placed in sockfd map for maintenance. This thread repeatedly updates the read/write cache states of all the file handles in the sockfd map by calling epoll_wait, and when the read/write cache is ready and a read/write task or poll wait task blocked on this file handle (for example, a co-routine falling into waiting in library function hooks such as poll, select, and epoll_wait) currently exists, the corresponding co-routine is woken up.

With respect to the aforesaid runtime virtual machine system, in order to minimize the start of an application program for the runtime virtual machine, it is only required to create 4 threads, namely: 1 main thread, 1 co-routine scheduling thread, 1 event-driven thread, and 1 asynchronous input and output and timer thread. Even a process that is started with the aforesaid minimized resource configuration (that is, only 4 threads are required) can easily handle hundreds of small concurrent tasks without any lag. When a large application program with a comparatively high resource occupation rate (such as a database) is encountered, the use of the co-routine scheduling threads, the number of which is the same as the number of host CPU cores, may be considered, and other background threads are configured in a proportionally reduced manner. In other words, for no matter an application scenario of a small task with multiple processes or an application scenario of a large task with multiple threads, the runtime virtual machine of the disclosure may provide a very good support. Specific examples are given as follows:

In the first case, all the processes are started with a minimized configuration (4 threads) and the load on each process is an average of 100 small tasks. When 1,000 processes are started, the overall system load reaches 100,000 concurrent requests, but only 4,000 threads are required to be created.

In the second case, in a 64-core system, only one large application (such as a database) is started, including: 1 main thread, 64 co-routine scheduling threads, 8 epoll threads, 8 AIO/timer threads, and 10 database background threads (such as publishing and subscription, backup and recovery, monitoring, log cleaning, table space recycling and sorting, and so on, all of which use system native threads), a total of 91 threads. Such configuration is sufficient to handle hundreds of thousands of concurrent database accesses, and the total number of the threads is less than 100.

The runtime virtual machine system provided by the embodiment of the disclosure provides a complete set of co-routinized dynamic runtime libraries by dynamic library injection technology. All the ways of interacting with the operating system have been taken over by the dynamically running library function hooks in the disclosure (that is, a complete set of co-routine version library functions are implemented). The application program virtually runs on another virtual system that is completely compatible with the native system, namely a co-routine virtualization environment. Any application in the host system may directly run in the co-routinized virtual environment without being modified, and thus transparently implements a solution of replacing a thread with a co-routine.

In another embodiment of the disclosure, a runtime virtual machine system 400 is further provided, the system 400 comprising: a main thread 402, a co-routine scheduling thread 403, an event-driven thread 404, an asynchronous input and output and timer thread 405, and a system native thread 406 running in a runtime virtualization environment 401.

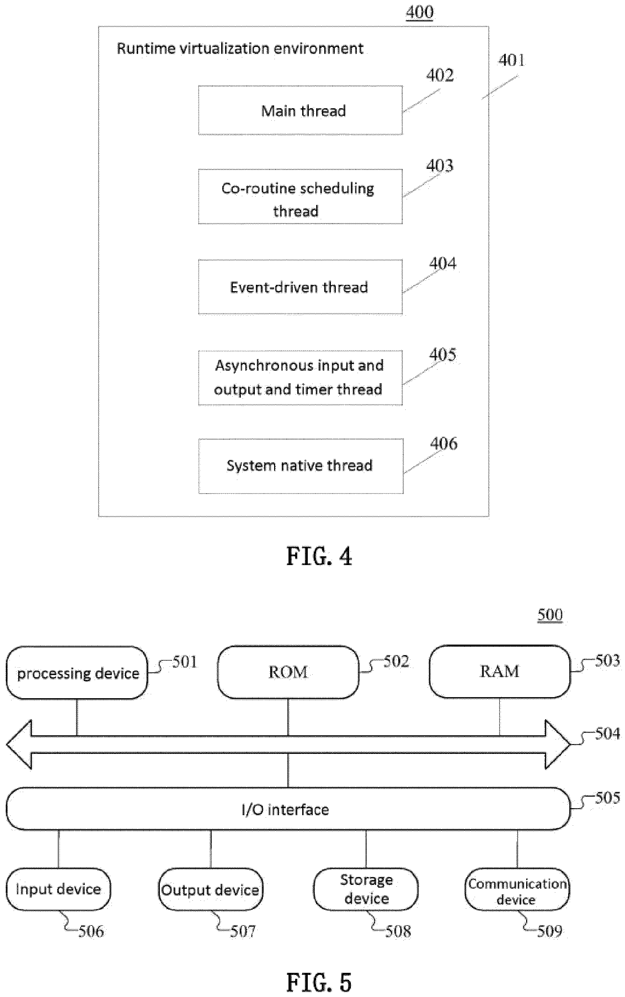

As compared to the embodiment shown in FIG. 3, the embodiment shown in FIG. 4 has the system native thread 406. As compared to the case in the embodiment shown in FIG. 3, in the embodiment shown in FIG. 4, the generated dynamic runtime library retains the characteristics of the native runtime library, and the native runtime library may be called when the application program has a requirement to generate the system native thread 406.

Since the library functions related to thread management have been hooked, in a default case, it is all the co-routines that are created after the dynamic runtime library is loaded. When the application program is required to generate a system native thread, a user may select to start the corresponding thread in a native thread manner by specifying the function name of the thread function; or dynamically specify whether a certain newly created thread is started in a co-routine manner or a native thread manner by implementing a callback interface corresponding to the library function for creating the thread.

Optionally, the runtime virtual machine system provided by this embodiment may implement a set of callback interfaces other than common interfaces such as a parameter configuration interface and a log interface, and most of the library function hooks in the dynamic runtime library may be equipped with corresponding callback functions. Developers may select to implement some or all callbacks, or use none of the callbacks. By these callback interfaces, the developers may partly change the behaviors of the library functions, or even completely take over certain specific library functions, and thus implement, for example, the following:

Some optimizations that can be originally implemented only by modifying the underlying system mechanism are directly injected into the library function; and such injection is only with respect to the current application and will not affect other running programs;

Secondary development is performed based on the runtime virtual machine system of the disclosure to implement another set of runtime virtual machine systems (for example, by taking over all library functions related to file IO and changing local file reading and writing to cloud disk reading and writing, a runtime virtual machine based on a cloud disk may be implemented).

Taking a callback of a recv (receiving a network packet) interface as an example, the operation logic of the callback function in the runtime virtual machine system of the disclosure is explained. When the developers specify a callback function, the recv function of the runtime virtual machine system of the disclosure will first transmit the network packet received from the socket to the callback function, and determine the final returning manner of the recv function in accordance with the return value of the callback function. The callback function may select not to perform any intervention and directly return the packet; it may also select to discard the packet; or even further modify the content of the packet and return the modified packet to the application.

The runtime virtual machine system provided by this embodiment provides a callback interface. The developers may inject a new logic into the hook of the co-routine library or completely change the logic of the hook function by implementing the callback function, thereby implementing expansion and enhancement of the original application program, or implementing a new set of runtime virtualization environments by means of this runtime virtual machine framework.

Reference is now made to FIG. 5, which shows a schematic diagram of a structure of an electronic device 500 suitable for implementing embodiments of the disclosure.

As shown in Figure 5, the electronic device 500 may comprise a processing device (e.g., a central processing unit, a graphics processing unit, etc.) 501, which may perform various appropriate actions and processes according to a program stored in a read-only memory (ROM) 502 or a program loaded from a storage device 508 into a random access memory (RAM) 503. Various programs and data required for the operation of the electronic device 500 are also stored in the RAM 503. The processing device 501, the ROM 502 and the RAM 503 are connected to each other through a bus 504. An input/output (I/O) interface 505 is also connected to the bus 504.

Generally, the following devices may be connected to the I/O interface 505: an input device 506 including, for example, a touch screen, a touchpad, a keyboard, a mouse, and so on; an output device 507 including, for example, a liquid crystal display (LCD), a speaker, a vibrator, and so on; a storage device 508 including, for example, a magnetic disk, a hard disk, and so on; and a communication device 509. The communication device 509 may allow the electronic device 500 to communicate with other devices in a wireless or wired manner to exchange data. Although FIG. 5 shows the electronic device 500 having various devices, it should be understood that it is not required to implement or possess all of the devices shown, and more or less devices may alternatively be implemented or possessed. Each block shown in FIG. 5 may represent one device, or may represent multiple devices according to requirements.

In particular, according to the embodiment of the disclosure, the process described above with reference to the flowchart may be implemented as a computer software program. For example, the embodiment of the disclosure includes a computer program product, which includes a computer program carried on a computer-readable medium, the computer program containing a program code for performing the method shown in the flowchart. In such embodiment, the computer program may be downloaded and installed from the network through the communication device 509, or installed from the storage device 508, or installed from the ROM 502. When the computer program is executed by the processing device 501, the aforesaid functions defined in the method according to the embodiment of the disclosure are executed.

It shall be noted that the computer-readable medium according to the embodiment of the discourse may be a computer-readable signal medium or a computer-readable storage medium or any combination of the aforesaid two media. The computer-readable storage medium may be, for example, but not limited to, an electronic, magnetic, optical, electromagnetic, infrared, or semiconductor system, apparatus or device, or any combination thereof. More specific examples of the computer-readable storage medium may include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the embodiment of the disclosure, the computer-readable storage medium may be any tangible medium containing or storing a program, and the program may be used by or in combination with an instruction execution system, apparatus or device. In the embodiment of the disclosure, the computer-readable signal medium may include a data signal propagated in a baseband or propagated as a part of a carrier wave, in which a computer-readable program code is carried. Such propagated data signal may adopt multiple forms, including but not limited to electromagnetic signals, optical signals, or any suitable combination thereof. The computer-readable signal medium may also be any computer-readable medium other than the computer-readable storage medium, and the computer-readable medium may send, propagate, or transmit a program used by or in combination with the instruction execution system, apparatus or device. The program code contained on the computer-readable medium may be transmitted using any appropriate medium, including but not limited to wireless, wire, optical cable, RF (Radio Frequency), and so on, or any suitable combination thereof.

The aforesaid computer-readable medium may be included in a server; or may exist independently without being assembled into the server. The aforesaid computer-readable medium carries one or more programs, and the one or more programs, when executed by the server, cause the server to: construct a dynamic runtime library based on a native runtime library of an application program; load the dynamic runtime library when starting the application program, and generate a co-routine scheduling thread, the co-routine scheduling thread being used to schedule at least one co-routine; receive a task request of the application program; and schedule the co-routine using the co-routine scheduling thread based on the task request and the dynamic runtime library, so that the co-routine completes a task corresponding to the task request.

Computer program codes for performing operations of the embodiment of the disclosure may be written in one or more programming languages, including object-oriented programming languages such as Java, Smalltalk, and C++, and further including conventional procedural programming languages such as the "C" programming language or similar programming languages, or a combination thereof. The program codes may be executed entirely on a client computer, partly on the client computer, as an independent software package, partly on the client computer and partly on a remote computer, or entirely on the remote computer or a server. In a case involving a remote computer, the remote computer may be connected to the client computer by means of any type of network, including a local area network (LAN) or a wide area network (WAN), or may be connected to an external computer (e.g., by means of the Internet using an Internet service provider).

The flowcharts and block diagrams in the figures illustrate architectures, functions and operations that may be implemented by systems, methods and computer program products according to various embodiments of the disclosure. In this regard, each block in the flowcharts or block diagrams may represent a module, a program segment, or a part of a code, which contains one or more executable instructions for implementing specified logic functions. It shall also be noted that in some alternative implementations, the functions labeled in the blocks may also occur in an order different from that labeled in the figures. For example, two successively represented blocks may actually be executed substantially in parallel, and they may sometimes be executed in a reverse order, which depends on the functions involved. It shall also be noted that each block in the block diagrams and/or flowcharts, and combinations of the blocks in the block diagrams and/or flowcharts may be implemented with a dedicated hardware-based system that performs specified functions or operations, or may be implemented with a combination of dedicated hardware and computer instructions.

The involved units described in the embodiment of the disclosure may be implemented by software or hardware. The described units may also be provided in a processor. For example, descriptions may be made as follows: a processor comprising a constructing unit, a generating unit, a task receiving unit, and a co-routine scheduling unit. The names of these units do not form limitations of the units themselves in some cases. For example, the constructing unit may also be described as a unit that is "configured to construct a dynamic runtime library based on a native runtime library of an application program".

The descriptions above are only preferred embodiments of the disclosure and explanations of the technical principles used. Those skilled in the art should understand that the scope of the invention involved in the embodiment of disclosure is not limited to the technical solutions formed by the specific combinations of the aforesaid technical features, but shall also cover other technical solutions formed by any combination of the aforesaid technical features or their equivalent features without departing from the aforesaid inventive concept, such as the technical solutions formed by replacing the aforesaid features with the technical features having similar functions disclosed in the embodiment of the disclosure (but not limited thereto).

**Claims**

1. A runtime virtualization method, the method comprising:

   constructing a dynamic runtime library based on a native runtime library of an application program, the dynamic runtime library simulating a thread implemented in the native runtime library in a co-routine manner;
   loading the dynamic runtime library when starting the application program, and generating a runtime virtualization environment and a co-routine scheduling thread running in the runtime virtualization environment, the co-routine scheduling thread being used to schedule at least one co-routine, and the runtime virtualization environment being an environment after a runtime environment generated by the native runtime library is replaced;
   receiving a task request of the application program in the runtime virtualization environment; and

scheduling the co-routine using the co-routine scheduling thread based on the task request and the dynamic runtime library, so that the co-routine completes a task corresponding to the task request.

2. The method according to claim 1, wherein the scheduling the co-routine using the co-routine scheduling thread based on the task request and the dynamic runtime library, so that the co-routine completes a task corresponding to the task request comprises:

creating at least one co-routine based on the task request and the dynamic runtime library; and
transmitting the at least one co-routine to the co-routine scheduling thread so as to schedule the at least one co-routine using the co-routine scheduling thread.

3. The method according to claim 2, wherein the co-routine scheduling thread includes: a scheduler and a lock-free queue for placing the at least one co-routine, and the scheduling the at least one co-routine using the co-routine scheduling thread comprises:

acquiring, by the scheduler, a co-routine in a ready state among the at least one co-routine from the lock-free queue;
synchronizing a co-routine context of the co-routine with a thread context in a thread control block;
acquiring, by the scheduler, a next co-routine in the ready state from the lock-free queue, and synchronizing a co-routine context of the next co-routine with the thread context in the thread control block after the co-routine actively yields; and
continuing to acquire, by the scheduler, a co-routine from the lock-free queue and synchronizing the thread control block until there is no co-routine in the lock-free queue after the next co-routine actively yields.

4. The method according to claim 1, wherein the method further comprises:

receiving a native request of the application program; and
creating at least one thread based on the native request and the native runtime library in the dynamic runtime library, and executing a task corresponding to the native request by the at least one thread.

5. The method according to one of claims 1-4, wherein the constructing a dynamic runtime library based on a native runtime library of an application program comprises:

constructing a thread library function hook related to a first library function using a hook mechanism, the first library function being a library function for creating a thread and acquiring a thread descriptor in the native runtime library; and
replacing the thread descriptor with a co-routine context structure in the thread library function hook, marking a current running thread or co-routine by a global variable with a thread local constraint, and managing thread local storage information in the co-routine context structure by a synchronization management module, the synchronization management module being used to synchronize the thread local storage of the co-routine when the co-routine scheduling thread schedules the co-routine.

6. The method according to claim 5, wherein the constructing a dynamic runtime library based on a native runtime library of an application program further comprises:

constructing a lock library function hook related to a second library function using the hook mechanism, the second library function being a library function that is respectively related to a lock, a conditional variable, and a semaphore in the native runtime library; and
judging a current running subject by the global variable, and giving a lock mechanism corresponding to the current running subject based on the current running subject in the lock library function hook.

7. The method according to claim 5, wherein the constructing a dynamic runtime library based on a native runtime library of an application program further comprises:

constructing a switching library function hook related to a third library function using the hook mechanism, the third library function being a library function that can cause a thread switching or suspension operation in the native runtime library; and
replacing, by the switching library function hook, a thread switching or suspension mechanism with a co-routine switching or suspension mechanism.

8. A runtime virtualization apparatus, the apparatus comprising:

a constructing unit, which is configured to construct a dynamic runtime library based on a native runtime library of an application program, the dynamic runtime library simulating a thread implemented in the native runtime library in a co-routine manner;

a generating unit, which is configured to load the dynamic runtime library when starting the application program, and generating a runtime virtualization environment and a co-routine scheduling thread running in the runtime virtualization environment, the co-routine scheduling thread being used to schedule at least one co-routine, and the runtime virtualization environment being an environment after a runtime environment generated by the native runtime library is replaced;

a task receiving unit, which is configured to receive a task request of the application program in the runtime virtualization environment; and

a co-routine scheduling unit, which is configured to schedule the co-routine using the co-routine scheduling thread based on the task request and the dynamic runtime library, so that the co-routine completes a task corresponding to the task request.

9. The apparatus according to claim 8, wherein the scheduling unit is configured to: create at least one co-routine based on the task request and the dynamic runtime library; and transmit the at least one co-routine to the co-routine scheduling thread so as to schedule the at least one co-routine using the co-routine scheduling thread.

10. The apparatus according to claim 8, wherein the co-routine scheduling thread includes: a scheduler and a lock-free queue for placing the at least one co-routine, and the scheduling unit is further configured to:

acquire, by the scheduler, a co-routine in a ready state among the at least one co-routine from the lock-free queue;

synchronize a co-routine context of the co-routine with a thread context in a thread control block;

acquire, by the scheduler, a next co-routine in the ready state from the lock-free queue, and synchronize a co-routine context of the next co-routine with the thread context in the thread control block after the co-routine actively yields; and

continue to acquire, by the scheduler, a co-routine from the lock-free queue and synchronize the thread control block until there is no co-routine in the lock-free queue after the next co-routine actively yields.

11. The apparatus according to claim 8, wherein the apparatus further comprises: a native receiving unit, which is configured to receive a native request of the application program; and

a thread scheduling unit, which is configured to create at least one thread based on the native request and the dynamic runtime library, and execute a task corresponding to the native request by the at least one thread.

12. The apparatus according to one of claims 8-11, wherein the constructing unit is configured to:

construct a thread library function hook related to a first library function using a hook mechanism, the first library function being a library function for creating a thread and acquiring a thread descriptor in the native runtime library; and replace the thread descriptor with a co-routine context structure in the thread library function hook, mark a current running thread or co-routine by a global variable with a thread local constraint, and manage thread local storage information in the co-routine context structure by a synchronization management module, the synchronization management module being used to synchronize the thread local storage of the co-routine when the co-routine scheduling thread schedules the co-routine.

13. The apparatus according to claim 12, wherein the constructing unit is configured to: construct a lock library function hook related to a second library function using the hook mechanism, the second library function being a library function that is related to a lock in the native runtime library; and judge a current running subject by the global variable with a thread local constraint, and give a lock mechanism corresponding to the current running subject based on the current running subject in the lock library function hook.

14. The apparatus according to claim 12, wherein the constructing unit is configured to:

construct a switching library function hook related to a third library function using the hook mechanism, the third library function being a library function that can cause a thread switching or suspension operation in the native runtime library; and replace, by the switching library function hook, a thread switching or suspension mechanism with a co-routine switching or suspension mechanism.

15. A runtime virtual machine system, the system comprising: a co-routine scheduling thread, a main thread, an event-driven (EPOLL) thread, and an asynchronous input and output (AIO) and timer thread running in a runtime virtualization environment, wherein the runtime virtualization environment is generated by loading a dynamic runtime library, the dynamic runtime library is constructed based on a native runtime library of an application program, and the dynamic runtime library simulates a thread implemented in the native runtime library in a co-routine manner;

the co-routine scheduling thread is used to schedule at least one co-routine, so that the co-routine completes a task request of the application program;
the main thread is created when the application program is started;
the event-driven thread is used to maintain a state of a file handle and wake up a corresponding co-routine when a read or write cache is ready and a read or write task blocked on the file handle exists; and
the asynchronous input and output and timer thread acquires an asynchronous input and output task result and wakes up a co-routine in an IO wait; when the system calls timeout return, a timeout task is popped out and woken up; when the system calls an asynchronous IO task result, the co-routine in the IO wait is woken up.

16. An electronic device, comprising:

one or more processors; and
a storage device, on which one or more programs are stored,
the one or more programs, when executed by the one or more processors, cause the one or more processors to implement the method according to any of claims 1-7.

17. A non-transitory computer-readable storage medium storing a computer program thereon, wherein the computer program, when executed by a processor, implements the method according to any of claims 1-7.

<u>100</u>

```
┌─────────────────────────────────────────────┐
│ Constructing a dynamic runtime library based on  │── 101
│  a native runtime library of an application program │
└─────────────────────────────────────────────┘
                      │
                      ▼
┌─────────────────────────────────────────────┐
│ Loading the dynamic runtime library when starting │── 102
│  the application program, and generating a runtime │
│ virtualization environment and a co-routine scheduling │
│ thread running in the runtime virtualization environment │
└─────────────────────────────────────────────┘
                      │
                      ▼
┌─────────────────────────────────────────────┐
│ Receiving a task request of the application program │── 103
│   in the runtime virtualization environment        │
└─────────────────────────────────────────────┘
                      │
                      ▼
┌─────────────────────────────────────────────┐
│ Scheduling the co-routine using the co-routine    │── 104
│ scheduling thread based on the task request and the │
│ dynamic runtime library, so that the co-routine    │
│ completes a task corresponding to the task request │
└─────────────────────────────────────────────┘
```

## FIG. 1

<u>200</u>

```
┌─────────────────────────────────┐
│                                 │── 201
│        Constructing unit        │
│                                 │
└─────────────────────────────────┘
                │
┌─────────────────────────────────┐
│                                 │── 202
│         Generating unit         │
│                                 │
└─────────────────────────────────┘
                │
┌─────────────────────────────────┐
│                                 │── 203
│        Task receiving unit      │
│                                 │
└─────────────────────────────────┘
                │
┌─────────────────────────────────┐
│                                 │── 204
│      Co-routine scheduling unit  │
│                                 │
└─────────────────────────────────┘
```

## FIG. 2

FIG. 3

400

**Runtime virtualization environment**

401

| Main thread | 402 |

| Co-routine scheduling thread | 403 |

| Event-driven thread | 404 |

| Asynchronous input and output and timer thread | 405 |

| System native thread | 406 |

FIG. 4

500

processing device ⌐501    ROM ⌐502    RAM ⌐503

⌐504

I/O interface ⌐505

Input device ⌐506    Output device ⌐507    Storage device ⌐508    Communication device ⌐509

FIG. 5

## INTERNATIONAL SEARCH REPORT

| International application No. |
|---|
| **PCT/CN2024/073763** |

**A. CLASSIFICATION OF SUBJECT MATTER**

G06F9/455(2018.01)i

According to International Patent Classification (IPC) or to both national classification and IPC

**B. FIELDS SEARCHED**

Minimum documentation searched (classification system followed by classification symbols)

IPC:G06F9/-

Documentation searched other than minimum documentation to the extent that such documents are included in the fields searched

Electronic data base consulted during the international search (name of data base and, where practicable, search terms used)

CNABS, CNTXT, CNKI, ENTXTC, VEN, ENTXT, IEEE: 运行, 原生, 库, 虚拟, 应用, 程序, 协程, 线程, 模拟, 调用, 加载, 阻塞, 注入, 异步, 定时器, 唤醒, 超时, 京东科技, runtime, native, library, virtual, application, program, coroutine, thread, simulate, invoke, load, block, inject, asynchronous, timer, awake, timeout, JD TECHNOLOGY

**C. DOCUMENTS CONSIDERED TO BE RELEVANT**

| Category* | Citation of document, with indication, where appropriate, of the relevant passages | Relevant to claim No. |
|---|---|---|
| A | CN 112905267 A (ALIBABA GROUP HOLDING LIMITED) 04 June 2021 (2021-06-04) description, paragraphs 75-93, 99-117, and 236-255 | 1-17 |
| A | CN 109739482 A (EB INFORMATION TECHNOLOGY CO., LTD.) 10 May 2019 (2019-05-10) entire document | 1-17 |
| A | CN 111078323 A (PING AN TECHNOLOGY (SHENZHEN) CO., LTD.) 28 April 2020 (2020-04-28) entire document | 1-17 |
| A | CN 112346835 A (SHANGHAI HANZHIYOU INFORMATION TECHNOLOGY SERVICE CO., LTD.) 09 February 2021 (2021-02-09) entire document | 1-17 |
| A | US 11709720 B1 (DATADOG, INC.) 25 July 2023 (2023-07-25) entire document | 1-17 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 March 2024** | **19 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/073763** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2016246643 A1 (TENCENT TECHNOLOGY (SHENZHEN) CO., LTD.) 25 August 2016 (2016-08-25)<br>entire document | 1-17 |
| A | WO 2023046141 A1 (HUAWEI TECHNOLOGIES CO., LTD.) 30 March 2023 (2023-03-30)<br>entire document | 1-17 |

Form PCT/ISA/210 (second sheet) (July 2022)

## INTERNATIONAL SEARCH REPORT
### Information on patent family members

International application No.

**PCT/CN2024/073763**

| Patent document cited in search report | | | Publication date (day/month/year) | Patent family member(s) | | | Publication date (day/month/year) |
|---|---|---|---|---|---|---|---|
| CN | 112905267 | A | 04 June 2021 | None | | | |
| CN | 109739482 | A | 10 May 2019 | CN | 109739482 | B | 15 April 2022 |
| CN | 111078323 | A | 28 April 2020 | None | | | |
| CN | 112346835 | A | 09 February 2021 | CN | 112346835 | B | 09 December 2022 |
| US | 11709720 | B1 | 25 July 2023 | None | | | |
| US | 2016246643 | A1 | 25 August 2016 | US | 9501319 | B2 | 22 November 2016 |
| | | | | WO | 2015078394 | A1 | 04 June 2015 |
| | | | | CN | 104142858 | A | 12 November 2014 |
| | | | | CN | 104142858 | B | 28 September 2016 |
| WO | 2023046141 | A1 | 30 March 2023 | CN | 115878301 | A | 31 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310942815